# EUROPÄISCHE PATENTANMELDUNG

(11) **EP 4 325 684 A1**
(43) Veröffentlichungstag der Anmeldung: **21.02.2024**
(21) Anmeldenummer: 22190840.3
(22) Anmeldetag: 17.08.2022
(51) Int. Cl.: H02J 3/06, H02J 3/38

(54) **VEREINZELTES HYBRIDKRAFTWERK**

(71) Anmelder: Wobben Properties GmbH, 26607 Aurich (DE)
(72) Erfinder: QUITMANN, Eckard, 28199 Bremen (DE)
(74) Vertreter: Eisenführ Speiser

(57) **Zusammenfassung**

Die Erfindung betrifft ein elektrisches Netz (1100), insbesondere für ein vereinzeltes Hybridkraftwerk (1000), umfassend: einen ersten Netzabschnitt (1110), der dazu eingerichtet ist: mit wenigstens einer Windenergieanlage verbunden zu werden, mit wenigstens einer Gaserzeugungsanlage verbunden zu werden, und eine, von der Windenergieanlage erzeugte elektrische Leistung zu der wenigstens einen Gaserzeugungsanlage zu transportieren; einen zweiten Netzabschnitt (1120), der dazu eingerichtet ist: mit der wenigstens einen Gaserzeugungsanlage verbunden zu werden; und einen Netzumformer oder Netzumrichter (1130), der den ersten Netzabschnitt (1110) und den zweiten Netzabschnitt (1120) elektrisch miteinander verbindet und dazu eingerichtet ist: elektrische Leistung zwischen dem ersten elektrischen Netzabschnitt (1110) und dem zweiten elektrischen Netzabschnitt (1120) bidirektional auszutauschen, wobei der erste Netzabschnitt (1110), eine erste Netznennfrequenz (fN1) und eine erste Netznennspannung (UN1) aufweist und mit einer ersten Netzfrequenz (f1) und einer ersten Netzspannung (U1) betrieben werden kann; und der zweite Netzabschnitt (1120), eine zweite Netznennfrequenz (fN2) und eine zweite Netznennspannung (UN2) aufweist und mit einer zweiten Netzfrequenz (f2) und einer zweiten Netzspannung (U2) betrieben werden kann; und wobei der erste Netzabschnitt (1110) für einen ersten Frequenzbereich (Δf1) um die Netznennfrequenz (fN1) ausgelegt ist, in dem sich die erste Netzfrequenz (f1) bewegt; und der zweite Netzabschnitt (1120) für einen zweiten Frequenzbereich (Δf2) um die Netznennfrequenz (fN2) ausgelegt ist, in dem sich die zweite Netzfrequenz (f2) bewegt; wobei der erste Frequenzbereich (Δf1) größer als der zweite Frequenzbereich (Δf2) ist.

## Beschreibung

Die vorliegende Erfindung betrifft ein elektrisches Netz für ein Hybridkraftwerk sowie ein solches Hybridkraftwerk.

Hybridkraftwerke bzw. Hybridanlagen sind eine Form von Kraftwerken, welche zur Gewinnung von elektrischer Energie, Treibstoff und/oder Wärme aus verschiedenen Primärenergieträgern eingesetzt werden.

Ein bekanntes Beispiel für derartige Hybridkraftwerke bzw. Hybridanlagen sind die sogenannten windbasierten Power-to-Gas-Anlagen (kurz: P2G), die beispielsweise Gas aus Windenergie herstellen.

Die Windenergieanlagen wandeln dabei zunächst die Bewegungsenergie des Windes, auch Windenergie genannt, in elektrische Energie um. Anschließend wird diese elektrische Energie Elektrolyseuren zur Verfügung gestellt, um daraus Gas zu erzeugen.

Das so gewonnene Gas kann dann beispielsweise mittels einer Pipeline in ein Gasnetz gegeben werden oder mittels Synthese in einen anderen Stoff, wie Methan oder Kerosin, umgewandelt und anschließend per Schiff abtransportiert werden.

Nachteilig bei windbasierten Power-to-Gas-Anlagen ist insbesondere der unstetige Wind und die damit einhergehende schwankende Erzeugung elektrischer Energie durch die Windenergieanlagen.

Die aus der Unstetigkeit des Windes heraus resultierende (teilweise stark) schwankende elektrische Leistung, führt nicht nur zu einer schwankenden Erzeugung von Gas, sondern auch zu Fehlfunktionen innerhalb der Gaserzeugungsanlagen. Um dem entgegenzuwirken, werden zumeist überdimensionierte elektrische Speicher und aufwendige Regelungsstrategien verwendet, die äußerst kostenintensiv sind.

Aufgabe der vorliegenden Erfindung ist es daher wenigstens eines der obengenannten Probleme zu adressieren. Insbesondere soll ein elektrisches Netz und/oder ein Hybridkraftwerk vorgeschlagen werden, welches eine kostenoptimale Erzeugung von Gas, Flüssigkeit, Treibstoff oder dergleichen ermöglicht, bevorzugt unter Berücksichtigung von netztechnischen Problemen innerhalb einer Power-to-Gas-Anlage und/oder an versorgungsnetzfernen Standorten.

Erfindungsgemäß wird somit ein elektrisches Netz vorgeschlagen, insbesondere für ein vereinzeltes Hybridkraftwerk, umfassend einen ersten Netzabschnitt, der dazu eingerichtet ist mit wenigstens einer Windenergieanlage verbunden zu werden, mit wenigstens einer Gaserzeugungsanlage verbunden zu werden, und eine, von der Windenergieanlage erzeugte elektrische Leistung zu der wenigstens einen Gaserzeugungsanlage zu transportieren; einen zweiten Netzabschnitt, der dazu eingerichtet ist mit der wenigstens einen Gaserzeugungsanlage verbunden zu werden; und einen Netzumrichter, der den ersten Netzabschnitt und den zweiten Netzabschnitt elektrisch miteinander verbindet und dazu eingerichtet ist, elektrische Leistung zwischen dem ersten elektrischen Netzabschnitt und dem zweiten elektrischen Netzabschnitt bidirektional auszutauschen, wobei der erste Netzabschnitt, eine erste Netznennfrequenz und eine erste Netznennspannung aufweist und mit einer ersten Netzfrequenz und einer ersten Netzspannung betrieben werden kann; und der zweite Netzabschnitt, eine zweite Netznennfrequenz und eine zweite Netznennspannung aufweist und mit einer zweiten Netzfrequenz und einer zweiten Netzspannung betrieben werden kann; und wobei der erste Netzabschnitt für einen ersten Frequenzbereich um die Netznennfrequenz ausgelegt ist, in dem sich die erste Netzfrequenz bewegt; und der zweite Netzabschnitt für einen zweiten Frequenzbereich um die Netznennfrequenz ausgelegt ist, in dem sich die zweite Netzfrequenz bewegt; wobei der erste Frequenzbereich größer als der zweite Frequenzbereich.

Es wird also insbesondere ein elektrisches Netz für ein Hybridkraftwerk bzw. eine Hybridanlage vorgeschlagen, welches zwei Netzabschnitte aufweist, die unterschiedlich ausgeführt sind bzw. unterschiedlich betrieben werden können. Insbesondere wird dabei vorgeschlagen, dass das elektrische Netz einen ersten Netzabschnitt mit einem weiten Frequenzbereich aufweist, an dem die eigentliche Leistungselektronik für den Energietransport angeordnet werden kann, und einen zweiten Netzabschnitt mit einem engen Frequenzbereich, an dem spannungs- und/oder frequenzsensitive Hilfsmittel angeordnet werden können, wie beispielsweise die Leittechnik der Gaserzeugungsanlagen.

Der erste Netzabschnitt, der für den eigentlichen Energietransport zuständig ist, weist also eine deutlich flexiblere Netzfrequenz auf als der zweite Netzabschnitt, der für die Versorgung der spannungs- und/oder frequenzsensitiven Hilfsmittel der Gaserzeugungsanlagen zuständig ist.

Es wird also insbesondere ein elektrisches Netz für ein Hybridkraftwerk vorgeschlagen, bei dem so wenig wie möglich in den ersten Netzabschnitt eingegriffen wird. Der erste Netzabschnitt weist also insbesondere einen Frequenzbereich auf, in dem quasi die Netzfrequenz frei schweben darf (engl. free-floating system frequency).

Durch einen derartigen Aufbau mit zwei unterschiedlichen Netzabschnitten, die insbesondere über einen Netzumrichter miteinander verbunden sind, wird ein elektrisches Netz bereitgestellt, welches deutlich robuster und kostengünstiger für vereinzelte Hybridkraftwerke ist, als dafür bisher bekannte und verwendete elektrische Netze, die üblicherweise nur einen Netzabschnitt aufweisen.

Unter einem elektrischen Netz wird hierin insbesondere ein elektrisches Netzwerk zur Übertragung und Verteilung elektrischer Energie verstanden. Bevorzugt ist das elektrische Netz als Wechselspannungsnetz, insbesondere als dreiphasiges Wechselspannungsnetz, ausgebildet und weist zwei, insbesondere unterschiedliche, Netzabschnitte auf.

Der erste Netzabschnitt ist bevorzugt als dreiphasiges Wechselspannungsnetz ausgebildet und/oder insbesondere dazu eingerichtet, mit wenigstens einer Windenergieanlage verbunden zu werden, beispielsweise über einen Transformator. Der erste Netzabschnitt ist also insbesondere dazu eingerichtet, elektrischer Energie zu aggregieren, die von einer Vielzahl von Windenergieanlagen erzeugt wurde. Zudem ist der erste Netzabschnitt dazu eingerichtet, mit wenigstens einer Gaserzeugungsanlage verbunden zu werden, beispielsweise über einen weiteren Transformator und einen Gleichrichter.

Bevorzugt ist der erste Netzabschnitt für einen Leistungstransport bzw. eine Energieübertragung zwischen Windenergieanlagen und Gaserzeugungsanlagen ausgelegt. Der erste Netzabschnitt ist also insbesondere dazu ausgebildet und/oder vorgesehen, die von den Windenergieanlagen erzeugte elektrische Leistung zu den Gaserzeugungsanlagen zu transportieren, damit diese die elektrische Leistung in Gas wandeln.

Bevorzugt ist der erste Netzabschnitt wenigstens für eine Nennleistung von 100 MW oder größer ausgelegt. Dies bedeutet insbesondere auch, dass die einzelnen elektrischen Betriebsmittel des ersten Netzabschnittes, wie beispielsweise Transformatoren, Kabel, Leistungsschalter und dergleichen, für entsprechend hohe Ströme ausgelegt sind.

Der zweite Netzabschnitt ist bevorzugt als dreiphasiges Wechselspannungsnetz ausgebildet und/oder insbesondere dazu eingerichtet, mit wenigstens einem, bevorzugt spannungs- und/oder frequenzsensitiven, Hilfsmittel der Gaserzeugungsanlage verbunden zu werden, beispielsweise über einen Umrichter und/oder einen Gleichrichter.

Bevorzugt ist der zweite Netzabschnitt für eine Leistungsversorgung von Hilfsmitteln, insbesondere von spannungs- und/oder frequenzsensitiven Hilfsmitteln der Gaserzeugungsanlagen, ausgelegt.

Bevorzugt ist der zweite Netzabschnitt für eine Nennleistung bis zu 20 MW ausgelegt. Dies bedeutet insbesondere auch, dass die einzelnen elektrischen Betriebsmittel des zweiten Netzabschnittes, wie beispielsweise Sicherungen, Kabel und dergleichen, für entsprechend hohe Ströme ausgelegt sind.

Die Windenergieanlage sind also insbesondere nur an dem ersten Netzabschnitt und/oder nicht an dem zweiten Netzabschnitt angeordnet bzw. angeschlossen. Bevorzugt ist der erste Netzabschnitt deutlich leistungsstärker ausgelegt als der zweite Netzabschnitt, beispielsweise um einen Faktor zwischen 10 und 100. Der erste Netzabschnitt ist also insbesondere für eine größere Nenn-Leistung ausgelegt als der zweite Netzabschnitt. Beispielsweise beträgt die Nenn-Leistung aller Windenergieanlagen des vereinzelten Hybridkraftwerkes, die an den ersten Netzabschnitt angeschlossen sind, ca. 200 MW oder mehr und die Gesamtleistung aller Hilfsmittel des Hybridkraftwerkes, die an den zweiten Netzabschnitt angeschlossen sind, ca. 20 MW oder weniger.

Sowohl der erste Netzabschnitt als auch der zweite Netzabschnitt weisen jeweils eine Netz-Nenn-Frequenz auf. Insbesondere weist der erste Netzabschnitt eine erste Netz-Nenn-Frequenz auf und der zweite Netzabschnitt weist eine zweite Netz-Nenn-Frequenz auf.

Die Netz-Nenn-Frequenz gibt dabei insbesondere an, für welche Frequenz ein elektrisches Netz bzw. ein Netzabschnitt ausgelegt ist bzw. mit welcher Frequenz das elektrische Netz bzw. der Netzabschnitt ungefähr bzw. wünschenswerterweise betrieben werden soll.

Bevorzugt beträgt die erste Netz-Nenn-Frequenz und/oder die zweite Netz-Nenn-Frequenz im Wesentlichen ca. 50 Hz oder ca. 60 Hz.

In einer Ausführungsform weisen der erste Netzabschnitt und der zweite Netzabschnitt im Wesentlichen die gleiche Netz-Nenn-Frequenz auf. Beispielsweise beträgt die erste Netz-Nenn-Frequenz 50 Hz und die zweite Netz-Nenn-Frequenz beträgt ebenfalls 50 Hz. In einer anderen Ausführungsform weisen der erste Netzabschnitt und der zweite Netzabschnitt unterschiedliche Netz-Nenn-Frequenzen auf. Beispielsweise beträgt die erste Netz-Nenn-Frequenz 60 Hz und die zweite Netz-Nenn-Frequenz beträgt 50 Hz, oder anders herum.

Sowohl der erste Netzabschnitt als auch der zweite Netzabschnitt werden jeweils mit einer Netzfrequenz betrieben. Die Netzfrequenz variiert dabei mit der Zeit um den Wert der Netz-Nenn-Frequenz. Die Netzfrequenz kann auch als Netz-Ist-Frequenz oder als operative Netzfrequenz bezeichnet werden.

Die Netzfrequenz gibt dabei insbesondere an, welche Frequenz ein elektrisches Netz bzw. ein Netzabschnitt zu einem bestimmten Zeitpunkt aufweist.

Gemäß einer Ausführung wird nun vorgeschlagen, dass die Netzfrequenz des ersten Netzabschnittes deutlich stärker um den Wert der ersten Netz-Nenn-Frequenz herum schwanken darf, als die Netzfrequenz des zweiten Netzabschnittes um den Wert der zweiten Netz-Nenn-Frequenz.

Bevorzugt weisen der erste Netzabschnitt und der zweite Netzabschnitt jeweils einen Frequenzbereich um die Netz-Nenn-Frequenz auf, in der sich die Netzfrequenz im Wesentlichen frei bewegen darf. Die Netzabschnitte sind also insbesondere so aufgebaut bzw. werden so betrieben, dass etwaige Schutzeinrichtungen, wie Leistungsschalter, erst auslösen, wenn die Netzfrequenz den Frequenzbereich verlässt.

Der Frequenzbereich des ersten Netzabschnittes ist dabei deutlich größer ausgebildet als der Frequenzbereich des zweiten Netzabschnittes. Beispielsweise beträgt der Frequenzbereich des ersten Netzabschnittes 10 Prozent des Wertes der ersten Netz-Nenn-Frequenz und der Frequenzbereich des zweiten Netzabschnittes 1 Prozent des Wertes der zweiten Netz-Nenn-Frequenz. In diesem Fall kann sich die Netzfrequenz des ersten Netzabschnittes beispielsweise bei einer Netz-Nenn-Frequenz von 50 Hz frei zwischen 47,5 Hz und 52,5 Hz bewegen und die Netzfrequenz des zweiten Netzabschnittes beispielsweise bei einer Netz-Nenn-Frequenz von 50 Hz nur frei zwischen 49,75 Hz und 50,25 Hz bewegen. Bevorzugt wird die Netzfrequenz des ersten Netzabschnittes und/oder des zweiten Netzabschnittes erst dann, insbesondere aktiv, geregelt, wenn die Netzfrequenz den Frequenzbereich verlässt, beispielsweise durch Lastzuschaltung und/oder Lastabwurf.

Es wird also insbesondere auch vorgeschlagen, dass die Netzfrequenz innerhalb des ersten Netzabschnittes und/oder des zweiten Netzabschnittes mittels einer Leistungssteuerung oder Leistungsregelung eingestellt wird, insbesondere so, dass sich die Netzfrequenz innerhalb des Frequenzbereiches befindet. Erst wenn die Netzfrequenz sich aus dem Frequenzbereich heraus bewegt, wird aktiv in die Leistungsregelung des Netzabschnittes eingegriffen, beispielsweise durch Drosselung der Windenergieanlagen und/oder der Gaserzeugungsanlagen.

Sowohl der erste Netzabschnitt als auch derzweite Netzabschnitt weisen jeweils eine Netz-Nenn-Spannung auf.

Die Netz-Nenn-Spannung gibt dabei insbesondere an, für welche Spannung ein elektrisches Netz bzw. ein Netzabschnitt ausgelegt ist bzw. mit welcher Spannung das elektrische Netz bzw. der Netzabschnitt ungefähr bzw. wünschenswerterweise betrieben werden soll.

Insbesondere weist der erste Netzabschnitt eine erste Netz-Nenn-Spannung auf und der zweite Netzabschnitt weist eine zweite Netz-Nenn-Spannung auf. Bevorzugt beträgt die erste Netz-Nenn-Spannung und/oder die zweite Netz-Nenn-Spannung zwischen 230 V und 20 kV.

In einer Ausführungsform weisen der erste Netzabschnitt und der zweite Netzabschnitt im Wesentlichen die gleiche Netz-Nenn-Spannung auf. In einer bevorzugten Ausführungsform weisen der erste Netzabschnitt und der zweite Netzabschnitt unterschiedliche Netz-Nenn-Spannungen auf. Insbesondere ist die erste Netz-Nenn-Spannung größer als die zweite Netz-Nenn-Spannung.

Sowohl der erste Netzabschnitt als auch der zweite Netzabschnitt werden jeweils mit einer Netzspannung betrieben.

Die Netzspannung variiert dabei mit der Zeit um den Wert der Netz-Nenn-Spannung. Die Netzspannung kann auch als Netz-Ist-Spannung oder als operative Netzspannung bezeichnet werden. Die Netzspannung gibt dabei insbesondere an, welche Spannung ein elektrisches Netz bzw. ein Netzabschnitt zu einem bestimmten Zeitpunkt aufweist.

Gemäß einer Ausführung wird nun vorgeschlagen, dass die Netzspannung des ersten Netzabschnittes deutlich stärker um den Wert der ersten Netz-Nenn-Spannung herum schwanken darf, als die Netzspannung des zweiten Netzabschnittes um den Wert der zweiten Netz-Nenn-Spannung.

Der erste Netzabschnitt und der zweite Netzabschnitt sind ferner miteinander elektrisch verbunden, insbesondere über einen Netzumformer, einen Netzumrichter oder dergleichen.

Der Netzumformer bzw. der Netzumrichter sind also dazu eingerichtet, den ersten Netzabschnitt mit dem zweiten Netzabschnitt so elektrisch miteinander zu verbunden, dass elektrische Leistung zwischen dem ersten Netzabschnitt und dem zweiten Netzabschnitt ausgetauscht werden kann.

Bevorzugt sind der ersten Netzabschnitt und der zweite Netzabschnitt über einen bidirektionalen Netzumrichter miteinander verbunden, insbesondere so, dass elektrische Leistung von dem ersten Netzabschnitt in den zweiten Netzabschnitt geschoben werden kann und elektrische Leistung von dem zweiten Netzabschnitt in den ersten Netzabschnitt geschoben werden kann, beispielweise mittels einer entsprechenden Steuerung für das elektrische Netz.

Auch kann das elektrische Netz, also der erste Netzabschnitt und/oder der zweite Netzabschnitt, mit weiteren elektrischen Komponenten verbunden sein und/oder diese aufweisen, wie beispielsweise elektrischen Speichern, Transformatoren oder dergleichen.

Vorzugsweise weist der erste Netzabschnitt eine erste Nenn-Leistung auf und der zweite Netzabschnitt weist eine zweite Nenn-Leistung auf, wobei die erste Nenn-Leistung größer ist als die zweite Nenn-Leistung, insbesondere wenigstens 5-mal so groß, bevorzugt wenigstens 10-mal so groß.

Da der erste Netzabschnitt für den Leistungstransport zwischen Windenergieanlagen und Gaserzeugungsanlagen vorgesehen ist, ist der erste Netzabschnitt deutlich größer ausgelegt als der zweite Netzabschnitt. Dies betrifft insbesondere die gesamte Leistungselektronik des jeweiligen Netzabschnittes. Beispielsweise weist der erste Netzabschnitt eine Nenn-Leistung von 200 MW oder mehr auf und der zweite Netzabschnitt weist eine Nenn-Leistung von 20 MW oder weniger auf.

Vorzugsweise ist der erste Frequenzbereich gleich und/oder kleiner 20 Prozent, bevorzugt gleich und/oder kleiner gleich 10 Prozent, weiter bevorzugt gleich und/oder kleiner 5 Prozent, der ersten Netz-Nenn-Frequenz und/oder zweite Frequenzbereich ist gleich und/oder kleiner 2 Prozent, bevorzugt gleich und/oder kleiner gleich 1 Prozent, der zweiten Netz-Nenn-Frequenz.

Der erste Frequenzbereich und/oder der zweite Frequenzbereich werden somit bevorzugt in Abhängigkeit der Netz-Nenn-Frequenz des jeweiligen Netzabschnittes festgelegt.

Beispielsweise beträgt die Netz-Nenn-Frequenz des ersten Netzabschnittes 50 Hz und der erste Frequenzbereich des ersten Netzabschnittes beträgt 20 Prozent davon, also 10 Hz. Die erste Netzfrequenz kann sich dann beispielsweise in einem Frequenzbereich zwischen 40 Hz und 60Der zweite Frequenzbereich, also der Frequenzbereich des zweiten Netzabschnittes, ist hingegen deutlich enger gewählt als der erste Frequenzbereich, beispielsweise 0,2 Hz. Die zweite Netzfrequenz kann sich dann zwischen 49,9 Hz und 50,1 Hz im Wesentlichen freibewegen.

Es wird also insbesondere auch vorgeschlagen, dass der erste Netzabschnitt mit einem breiten Frequenzbereich, bevorzugt mit einem breiteren Frequenzbereich als üblich, betrieben wird und/oder, dass die zweite Netzfrequenz im zweiten Netzabschnitt sich nur minimal um die zweite Netz-Nenn-Frequenz bewegen darf, insbesondere so, dass auch spannungs- und/oder frequenzsensitive Mittel an den zweiten Netzabschnitt angeschlossen werden können.

Hierdurch kann insbesondere gewährleistet werden, dass die spannungs- und/oder frequenzsensitiven Hilfsmittel durch den zweiten Netzabschnitt zuverlässig versorgt werden können. Um die Netzfrequenz in den entsprechenden Frequenzbereichen zu halten, können verschiedene Mechanismen ergriffen werden, wie beispielsweise bestimmte Fahrpläne, Statiken oder dergleichen. Bevorzugt wird wenigstens eine Leistungsregelung verwendet, um die Netzfrequenz im Frequenzbereich zu halten.

Vorzugsweise ist der zweite Netzabschnitt dazu vorbereitet, spannungs- und/oder frequenzsensitive Hilfsmittel, insbesondere der Gaserzeugungsanlagen, spannungs- und/oder frequenzstabil mit elektrischer Leistung zu versorgen.

Es wird also insbesondere vorgeschlagen, die spannungs- und/oder frequenzsensitive Hilfsmittel der Gaserzeugungsanlagen an einem gesonderten Netzabschnitt anzuordnen, der wesentlich spannungs- und frequenzstabiler ist. Der zweite Netzabschnitt weist hierfür beispielweise entsprechende Mittel und/oder Anschlüsse auf. Die Mittel werden dabei insbesondere dazu verwendet, die Spannung und/oder die Frequenz im zweiten Netzabschnitt stabil zu halten. Die Mittel können beispielsweise eine Spannungserfassung, eine Frequenzerfassung, eine Leistungsregelung, ein elektrischer Speicher oder dergleichen sein. Bevorzugt weist der zweite Netzabschnitt wenigstens einen Anschluss für bzw. einen elektrischen Speicher auf, der dazu eingerichtet ist, mittels einer Wirkleistungseinspeisung und/oder Wirkleistungsentnahme die Netzfrequenz im zweiten Netzabschnitt stabil zu halten und/oder mittels einer Blindleistungseinspeisung und/oder Blindleistungsentnahme die Spannung im zweiten Netzspannung im zweiten Netzabschnitt stabil zu halten.

Vorzugsweise ist der Netzumrichter dazu eingerichtet, elektrische Leistung zwischen dem ersten Netzabschnitt und dem zweiten Netzabschnitt, bevorzugt bidirektional, auszutauschen.

Der Netzumrichter kann hierfür beispielsweise als bidirektionaler Frequenzumrichter ausgebildet sein.

Der Netzumrichter ist also insbesondere dazu eingerichtet eine elektrische Leistung von dem ersten Netzabschnitt in den zweiten Netzabschnitt zu schieben und/oder eine elektrische Leistung von dem zweiten Netzabschnitt in den ersten Netzabschnitt zu schieben. Bevorzugt ist der Netzumrichter dazu eingerichtet, elektrische Wirk- und/oder Blindleistung aus dem ersten Netzabschnitt zu entnehmen und/oder in den ersten Netzabschnitt einzuspeisen und/oder elektrische Wirk- und/oder Blindleistung aus dem zweiten Netzabschnitt zu entnehmen und/oder in den zweiten Netzabschnitt einzuspeisen. Der Netzumrichter ist also insbesondere dazu eingerichtet in einem 4-Quadranten-Betrieb zu arbeiten.

Alternativ oder zusätzlich ist der Netzumrichter dazu eingerichtet ist, einen Netzbildner für den ersten Netzabschnitt und/oder den zweiten Netzabschnitt auszubilden und/oder eine Spannung in den ersten Netzabschnitt und/oder den zweiten Netzabschnitt einzuprägen.

Der Netzumrichter ist also bevorzugt als spannungsprägender, insbesondere wechselspannungsprägender, Umrichter ausgebildet und insbesondere dazu eingerichtet, spannungsprägend zu arbeiten bzw. eine Spannung in den ersten Netzabschnitt und/oder den zweiten Netzabschnitt einzuprägen. Der Netzumrichter kann also insbesondere so angesteuert werden, dass er sich näherungsweise wie eine ideale Spannungsquelle verhält.

Netzbildner bzw. spannungsprägend in Bezug auf den Netzumrichter bedeutet dabei insbesondere, dass der Netzumrichter dazu eingerichtet ist:
1) eine sinusförmige, insbesondere dreiphasige, Wechselspannung, bevorzugt mit einer vorgegebenen Frequenz, in einen Netzabschnitt einzuprägen, insbesondere weitgehend unabhängig von der Last in dem Netzabschnitt und/oder
2) eine unverzögerte Wirk- und/oder Blindleistung für einen Netzabschnitt bereitzustellen, die in dem Netzabschnitt bewirkt, dass die Netzspannung und/oder die Netzfrequenz weitgehend konstant gehalten wird und/oder
3) eine niederohmige Senke für alle Störungen in einem Netzabschnitt auszubilden und/oder
4) eine hohe Kurzschlussleistung für einen Netzabschnitt bereitzustellen.

Alternativ oder zusätzlich ist der Netzumrichter dazu eingerichtet, die Netzspannung und/oder die Netzfrequenz im ersten Netzabschnitt und/oder im zweiten Netzabschnitt zu stabilisieren.

Dies kann beispielsweise dadurch erfolgen, dass der Netzumrichter aus dem ersten Netzabschnitt und/oder dem zweiten Netzabschnitt elektrische Wirkleistung und/oder elektrische Blindleistung entnimmt und/oder einspeist.

Auch kann der Netzumrichter mittels einer Steuereinheit dazu eingerichtet sein einen STATCOM oder einen Phasenschieber in Bezug auf den ersten Netzabschnitt und/oder den zweiten Netzabschnitt auszubilden.

Alternativ oder zusätzlich ist der Netzumrichter dazu eingerichtet ist, eine stabile zweite Netzfrequenz und/oder eine stabile zweite Netzspannung im zweiten Netzabschnitt bereitzustellen, insbesondere für spannungs- und/oder frequenzsensible Hilfsmittel.

Hierfür erfasst der Netzumrichter beispielsweise die zweite Netzfrequenz und/oder die zweite Netzspannung und stellt eine entsprechende Wirk- und/oder Blindleistung im zweiten Netzabschnitt bereit, die zu einer stabilen Netzfrequenz und/oder einer stabilen Netz-spannung im zweiten Netzabschnitt führen. Bevorzugt ist der Netzumrichter dazu eingerichtet, sowohl die Netzfrequenz als auch die Netzspannung im zweiten Netzabschnitt stabil zu halten.

Alternativ oder zusätzlich ist der Netzumrichter dazu eingerichtet ist, eine Netzspannung in den zweiten Netzabschnitt einzuprägen.

Der Netzumrichter ist also insbesondere dazu eingerichtet, einen spannungsprägenden Umrichter gegenüber dem zweiten Netzabschnitt auszubilden.

Alternativ oder zusätzlich ist der Netzumrichter dazu eingerichtet, eine Kurzschlussleistung für den ersten Netzabschnitt und/oder den zweiten Netzabschnitt bereitzustellen, insbesondere wenn eine Störung im ersten Netzabschnitt und/oder im zweiten Netzabschnitt auftritt.

Vorzugsweise ist das elektrische Netz elektrisch autark oder isoliert ausgeführt.

Dies bedeutet insbesondere, dass das elektrische Netz nicht mit einem elektrischen Verteil- oder Verbundnetz verbunden ist, wie beispielsweise dem europäischen Verbundnetz. Vielmehr ist das elektrische Netz als Inselnetz ausgebildet. Dies bedeutet insbesondere auch, dass die Netzspannung und/oder die Netzfrequenz innerhalb des elektrischen Netzes eigenständig geregelt werden muss, beispielsweise durch das Verwenden eines Netzbildners, der eine bestimmte Spannung in das elektrische Netz bzw. den ersten oder den zweiten Netzabschnitt einprägt.

Gleichwohl kann das elektrische Netz mit kleineren elektrischen Netzen verbunden sein, also Netzen, die eine kleinere Netz-Nenn-Leistung und/oder Netz-Nenn-Spannung aufweisen, wie beispielsweise dem elektrischen Netz eines Hafens, in dem das Gas verladen wird, welches durch das hierin beschriebene Hybridkraftwerk erzeugt wird.

Das elektrische Netz ist also insbesondere nicht mit einem elektrischen Versorgungs- oder Verbundnetz oder einem anderen elektrischen Verteilnetz verbunden, welches eine gleiche oder größere Netz-Nennleistung aufweist.

Insbesondere ist der erste Netzabschnitt nicht mit einem anderen elektrischen Verteilnetz und/oder einem elektrischen Versorgungs- oder Verbundnetz verbunden. An den ersten Netzabschnitt sind also im Wesentlichen nurdie Windenergieanlagen, die Gaserzeugungsanlagen und der Netzumrichter angeschlossen.

Vorzugsweise sind der erste Netzabschnitt und/oder der zweite Netzabschnitt strahlen- oder ringförmig ausgebildet.

Es wird also insbesondere auch vorgeschlagen, für die Netzabschnitte entsprechende Netztopologien zu wählen, die insbesondere die Nenn-Leistung des jeweiligen Netzabschnittes berücksichtigen. So kann es beispielsweise sinnvoll sein, für eine bestimmte Anzahl von Windenergieanlagen den ersten Netzabschnitt wie ein Strahlennetz aufzubauen und bei einer anderen Anzahl von Windenergieanlagen den ersten Netzabschnitt wie ein Ringnetz aufzubauen.

Vorzugsweise weist der erste Netzabschnitt und/oder der zweite Netzabschnitt und/oder der Netzumrichter weitere Anschlüsse für elektrische Mittel auf, die dazu eingerichtet sind, den ersten Netzabschnitt und/oder den zweiten Netzabschnitt, und insbesondere die erste Netz-Spannung und/oderdie zweite Netzspannung und/oderdie erste Netzfrequenz und/oder die zweite Netzfrequenz und/oder den Netzumrichter und/oder den Netzumrichter zu stabilisieren.

Die Anschlüsse können beispielsweise durch Kabel und/oder Leitungen und/oder Transformatoren und/oder Umrichter und/oder Leistungsschalter und/oder dergleichen ausgebildet sein.

Die Anschlüsse sind dabei insbesondere dazu eingerichtet, um elektrische Mittel an das elektrische Netz, also den ersten Netzabschnitt oder den zweiten Netzabschnitt oder den Netzumrichter, anzuschließen, wie beispielsweise einen Netzgeber, einen Netzbilder, eine rotierende Masse, einen elektrischen Speicher, eine Brennstoffzelle, eine Last oder dergleichen. Insbesondere sind die elektrischen Mittel dabei ausgebildet, wie nachstehend beschrieben.

Erfindungsgemäß wird ferner ein Hybridkraftwerk bzw. eine Hybridanlage vorgeschlagen, umfassend ein hierin beschriebenes elektrisches Netz, wenigstens eine Windenergieanlage, die an den ersten Netzabschnitt angeschlossen ist, und wenigstens eine Gaserzeugungsanlage, die an den ersten Netzabschnitt und an den zweiten Netzabschnitt angeschlossen ist.

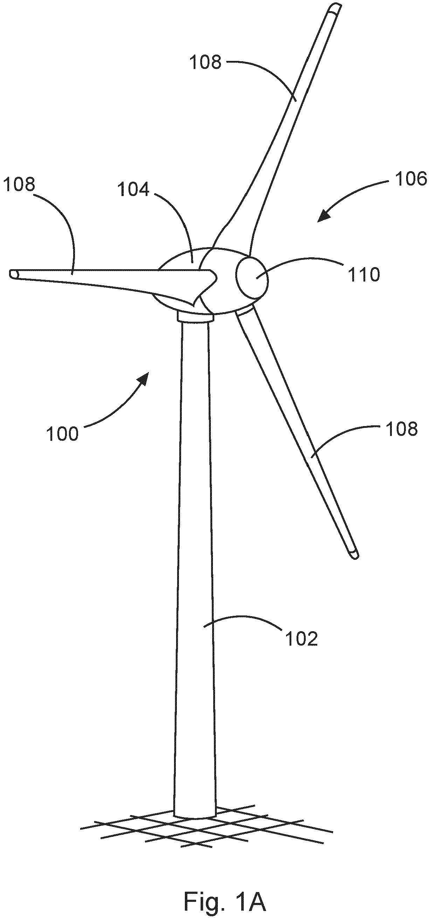

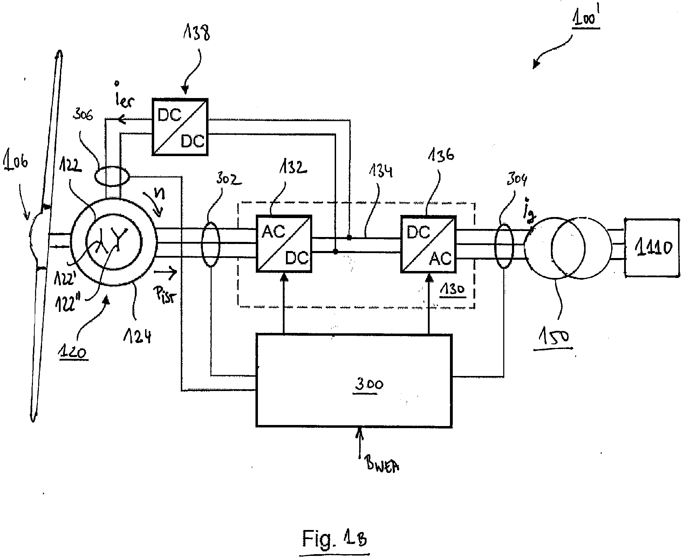

Die wenigstens eine Windenergieanlage kann dabei jeden beliebigen Typs sein. Bevorzugt ist die Windenergieanlage ausgeführt wie hierin beschrieben und/oder in Fig. 1 gezeigt.

Besonders bevorzugt ist die Windenergieanlage, beispielsweise mittels eines Vollumrichters, dazu eingerichtet, an einem hierin beschriebenen ersten Netzabschnitt stabil betrieben zu werden, insbesondere auch dann, wenn die Netzfrequenz und/oder die Netzspannung (stark) schwankt.

Bevorzugt weist das Hybridkraftwerk eine Vielzahl von Windenergieanlagen auf, die an den ersten Netzabschnitt angeschlossen sind. Bevorzugt ist dabei keine der Windenergieanlagen an den zweiten Netzabschnitt angeschlossen. Die Vielzahl von Windenergieanlagen ist bevorzugt als eine funktionale Einheit ausgebildet. Das Hybridkraftwerk umfasst also beispielsweise zehn, zwanzig, fünfzig oder mehr Windenergieanlagen, die insbesondere als eine funktionale Einheit, bevorzugt als ein Windpark, ausgebildet bzw. betrieben werden. Bevorzugt weisen die Windenergieanlagen des Hybridkraftwerkes in Summe wenigstens eine Nenn-Leistung von 100 MW auf oder mehr auf.

Bevorzugt weist die Vielzahl von Windenergieanlagen hierfür eine übergeordnete Steuereinheit auf, insbesondere eine Windparksteuereinheit (engl. farm control unit). Die übergeordnete Steuereinheit bzw. die Windparksteuereinheit ist bevorzugt dazu eingerichtet, die von der Vielzahl der Windenergieanlagen erzeugte, elektrische Leistung zu steuern, beispielsweise durch Vorgaben und/oder Sollwerte an die einzelnen Windenergieanlagen bzw. deren Windenergieanlagensteuereinheiten. Die übergeordnete Steuereinheit bzw. die Windparksteuereinheit steuert dabei die erzeugte elektrische Leistung der Windenergieanlagen bevorzugt so, dass die Spannung und/oder die Frequenz im ersten Netzabschnitt im Wesentlich stabil ist.

Bevorzugt sind die Windenergieanlagen jeweils über einen Transformator, bevorzugt einen Windenergieanlagentransformator, an den ersten Netzabschnitt angeschlossen sind.

Bevorzugt weist das vereinzelte Hybridkraftwerk ferner wenigstens eine Gaserzeugungsanlage auf. Die wenigstens eine Gaserzeugungsanlage ist sowohl mit dem ersten Netzabschnitt als auch mit dem zweiten Netzabschnitt verbunden und wird beispielsweise mittels einer Gaserzeugungsanlagensteuereinheit gesteuert. Die Leistungsaufnahme der Gaserzeugungsanlage erfolgt dabei bevorzugt über einen Transformator und/oder einen Gleichrichter, der mit dem ersten Netzabschnitt verbunden ist, insbesondere um die, von den Windenergieanlagen erzeugte elektrische Leistung mittels eines Elektrolyseurs in Gas zu wandeln. Zudem ist die Gaserzeugungsanlage ebenfalls mit dem zweiten Netzabschnitt verbunden, insbesondere um die Leittechnik der Gaserzeugungsanlage mit einer stabilen Spannung zu versorgen.

Besonders bevorzugt weist die Vielzahl von Windenergieanlagen eine größere Nenn-Leistung auf, als die wenigstens eine Gaserzeugungsanlage. Insbesondere ist die Nenn-Leistung der Vielzahl von Windenergieanlagen zwischen 0 und 10 Prozent größer als die Nenn-Leistung der wenigstens einen Gaserzeugungsanlage.

Vorzugsweise ist sind die Windenergieanlagen jeweils über einen Wechselrichter und/oder einen Transformator mit dem ersten Netzabschnitt verbunden. Alternativ oder zusätzlich ist die Gaserzeugungsanlage über einen Gleichrichter und/oder einen Transformator mit dem ersten Netzabschnitt verbunden. Auch können weitere Leistungs- und/oder Schutzschalter vorgesehen sein, um die Verbindung zwischen dem ersten Netzabschnitt und den Windenergieanlagen bzw. der Gaserzeugungsanlage herzustellen.

Vorzugsweise weist die wenigstens eine Gaserzeugungsanlage spannungs- und/oder frequenz-sensible Hilfsmittel auf, die mit dem zweiten Netzabschnitt verbunden sind.

Die spannungs- und/oder frequenzsensiblen Hilfsmittel der Gaserzeugungsanlage sind also an den zweiten Netzabschnitt angeschlossen, insbesondere während die eigentliche Leistungsaufnahme der Gaserzeugungsanlage zu Gaserzeugung über den ersten Netzabschnitt erfolgt.

Unter den spannungs- und/oder frequenzsensitiven Hilfsmitteln bzw. spannungs- und/oder frequenzsensiblen Hilfsmitteln sind insbesondere die elektrischen Hilfsmittel der Gaserzeugungsanlagen zu verstehen, die sensibel auf Spannungs- und/oder Frequenzänderungen reagieren, beispielsweise die Mess- und/oder Warntechnik der Gaserzeugungsanlagen. Die spannungs- und/oder frequenzsensitiven Hilfsmittel sind insbesondere die elektrischen Mittel der Leittechnik einer Gaserzeugungsanlage, wie beispielsweise Steuereinheiten, Computer, Gaswarnanlagen und dergleichen. Die spannungs- und/oder frequenzsensitiven Hilfsmittel sind also insbesondere nicht direkt, sondern nur indirekt an der Gaserzeugung beteiligt.

Vorzugsweise ist das Hybridkraftwerk als Power-to-Gas-Kraftwerk oder als Power-to-Liquid-Kraftwerk oder Power-to-Fuel-Kraftwerk ausgebildet. Auch kann das Hybridkraftwerk als sonstiges P2X-Kratwerk ausgebildet sein.

Vorzugsweise ist das Hybridkraft elektrisch autark ist und/oder als vereinzeltes bzw. isoliertes Hybridkraftwerk ausgeführt ist.

Unter einem vereinzelten Hybridkraftwerk wird hierin insbesondere ein Hybridkraftwerk und/oder eine Hybridanlage verstanden, deren elektrisches Netz nicht mit einem weiteren elektrischen Netz, insbesondere einem elektrischen Versorgungsnetz verbunden ist.

Gleichwohl kann das elektrische Netz weitere elektrische Teilnetze aufweisen, wie beispielsweise einen elektrischen Netzabschnitt für die gasverarbeitenden Betriebe, wie beispielsweise einem Hafen zum Verschiffen des, durch das Hybridkraftwerk erzeugten Gases oder dergleichen.

Das vereinzelte Hybridkraftwerk kann daher auch als netz-isoliertes (engl. grid-isolated) Hybridkraftwerk bezeichnet werden. Insbesondere weist das elektrische Netz des vereinzelten Hybridkraftwerkes keine elektrische Verbindung zu einem weiteren elektrischen Netz, insbesondere höherer Leistung, auf.

Vorzugsweise weist das Hybridkraftwerk eine Vielzahl von Windenergieanlagen auf, die eine elektrische Gesamt-Nennleistung von wenigstens 50 MW, bevorzugt wenigstens 80 MW, weiter bevorzugt wenigstens 100 MW, weiter bevorzugt wenigstens 500 MW aufweisen. In weiteren Ausführungsformen kann das Hybridkraftwerk auch 1 GW oder mehr aufweisen.

Die Gesamt-Nenn-Leistung der Windenergieanlagen liegt dabei bevorzugt zwischen 0 und 10 Prozent oberhalb der Gesamt-Nenn-Leistung der Gaserzeugungsanlagen. Das Hybridkraftwerk ist also elektrisch überdimensioniert ausgeführt und könnte theoretisch mehr elektrische Leistung mit den Windenergieanlagen erzeugen als die Gaserzeugungsanlagen in Gas wandeln können.

Vorzugsweise ist die wenigstens eine Gaserzeugungsanlage dazu eingerichtet, Wasserstoff mittels Elektrolyse und/oder mittels eines Elektrolyseurs unter Verwendung elektrischer Energie aus dem ersten Netzabschnitt zu erzeugen.

Als Elektrolyseur wird dabei insbesondere eine Vorrichtung bezeichnet, in der mit Hilfe elektrischen Stromes eine chemische Reaktion, also eine Stoffumwandlung, herbeigeführt wird, wodurch eine Elektrolyse stattfindet. Bevorzugt weist der Elektrolyseur eine Polymer-Elektrolyt-Membran auf. Der Elektrolyseur ist also bevorzugt als PEM-Elektrolyseur ausgebildet.

Elektrolyse nennt man einen chemischen Prozess, bei dem elektrischer Strom eine Redoxreaktion erzwingt, beispielsweise um Gas zu erzeugen. Bevorzugt wird hierfür eine Gleichspannungsquelle verwendet.

Vorzugsweise ist die wenigstens eine Gaserzeugungsanlage dazu eingerichtet, den Wasserstoff zu einem weiteren Gas oder einem Fluid oder einem Treibstoff zu synthetisieren, insbesondere eines der Liste umfassend: Methan; Kerosin; E-Fuel; synthetischer Diesel; synthetische Kohlenwasserstoffe; Ammoniak; Düngemittel und deren Vorprodukte.

Vorzugsweise umfasst das Hybridkraftwerk ferner einen Netzgeber und/oder Netzbildner und/oder eine rotierende Masse und/oder weitere elektrische Mittel.

Bevorzugt sind der Netzgeber und/oder der Netzbildner und/oder die rotierende Masse und/oder die weiteren elektrischen Mittel an dem ersten Netzabschnitt und/oder an dem zweiten Netzabschnitt angeschlossen bzw. mit diesem verbunden.

Der erste Netzabschnitt und/oder der zweite Netzabschnitt sind also insbesondere dazu eingerichtet ist, dass wenigstens ein Netzgeber und/oder ein Netzbildner und/oder eine rotierende Masse daran angeschlossen werden kann. Der erste Netzabschnitt und/oder der zweite Netzabschnitt weist also insbesondere wenigstens einen Anschluss auf, an den ein Netzgeber und/oder ein Netzbildner und/oder eine rotierende Masse angeschlossen werden kann. Bevorzugt umfasst der Anschluss wenigstens einen Leistungsschalter und/oder einen Transformator und/oder einen Umrichter, insbesondere um den Netzgeber und/oder den Netzbildner und/oder die rotierende Masse mit dem ersten Netzabschnitt und/oder dem zweiten Netzabschnitt zu verbinden.

Der Netzbildner ist dabei insbesondere als spannungsprägende, insbesondere wechselspannungsprägende, Energiequelle ausgebildet, beispielsweise in Form einer Gas- oder Gas-und-Dampf-Turbine mit angeschlossenem Synchrongenerator.

Die weiteren elektrischen Mittel sind insbesondere elektrische Mittel, wie hierin beschrieben, beispielsweise ein elektrischer Speicher, ein elektrischer Speicher mit einem spannungsprägenden Umrichter, eine Brennstoffzelle oder dergleichen.

Der elektrische Speicher ist bevorzugt als elektrisches Energiespeichersystem ausgebildet und umfasst wenigstens einen Batteriespeicher, der insbesondere über einen spannungsprägenden Umrichter an den zweiten Netzabschnitt angeschlossen werden kann bzw. angeschlossen ist.

Die Brennstoffzelle ist bevorzugt dazu eingerichtet ist, aus dem Gas der Gaserzeugungsanlagen elektrische Energie zu erzeugen, und insbesondere für den zweiten Netzabschnitt bereitzustellen. Bevorzugt erzeugt die Brennstoffzelle aus dem Gas einen Gleichstrom, der bevorzugt über einen Umrichter in einen Wechselstrom gewandelt und so dem zweiten Netzabschnitt zur Verfügung gestellt wird.

Vorzugsweise weist das Hybridkraftwerk eine Hybridkraftwerkssteuereinheit auf, die dazu eingerichtet ist, dass Hybridkraftwerk zu steuern und/oder ein hierin beschriebenes Verfahren ausführen und/oder daran teilzunehmen.

Die Hybridkraftwerkssteuereinheit ist bevorzugt mit einer Windparksteuereinheit und/oder einer Gaserzeugungsanlagensteuereinheit verbunden, um ein hierin beschriebenes Verfahren auszuführen. In einerweiteren Ausführungsform können auch die Hybridkraftwerkssteuereinheit, die Windparksteuereinheit und die Gaserzeugungsanlagensteuereinheit in einer einzigen Steuereinheit untergebracht sein.

Alternativ oder zusätzlich weist das Hybridkraftwerk eine Windparksteuereinheit auf, die dazu eingerichtet ist, eine Vielzahl von Windenergieanlagen zu steuern und/oder ein hierin beschriebenes Verfahren auszuführen.

Alternativ oder zusätzlich weist das Hybridkraftwerk eine Gaserzeugungsanlagensteuereinheit auf, die dazu eingerichtet ist, die wenigstens eine Gaserzeugungsanlage zu steuern.

Vorzugsweise ist die Hybridkraftwerkssteuereinheit und/oder die Windparksteuereinheit und/oder die Gaserzeugungsanlagensteuereinheit dazu eingerichtet, die erste Netzfrequenz mittels der Vielzahl der Windenergieanlagen und/oder der wenigstens einen Gaserzeugungsanlage zu regeln, insbesondere so, dass sich die erste Netzfrequenz innerhalb des erste Frequenzbereiches bewegt.

Alternativ oder zusätzlich ist die Hybridkraftwerkssteuereinheit und/oder die Windparksteuereinheit und/oder die Gaserzeugungsanlagensteuereinheit dazu eingerichtet, die erste Netzspannung und/oder die zweite Netzspannung zu regeln, insbesondere so, dass die erste Netzspannung im Wesentlichen der ersten Netz-Nenn-Spannung entspricht und/oder so, dass die zweite Netzspannung um Wesentlichen der zweiten Netz-Nenn-Spannung entspricht.

Alternativ oder zusätzlich ist die Hybridkraftwerkssteuereinheit und/oder die Windparksteuereinheit und/oder die Gaserzeugungsanlagensteuereinheit dazu eingerichtet, die zweite Netzfrequenz stabil zu halten.

Alternativ oder zusätzlich ist die Hybridkraftwerkssteuereinheit und/oder die Windparksteuereinheit und/oder die Gaserzeugungsanlagensteuereinheit dazu eingerichtet, ein hierin beschriebenes Verfahren auszuführen.

Vorzugsweise weist die Hybridkraftwerksteuereinheit und/oder die Windparksteuereinheit eine Leistungsoptimierung, insbesondere einen MPP-Tracker und/oder eine Winderfassung, für die Vielzahl der Windenergieanlagen auf, um eine maximale elektrische Leistung mit den Windenergieanlagen zu erzeugen.

Es wird also insbesondere vorgeschlagen, dass die Windenergieanlagen leistungsoptimiert betrieben werden, beispielsweise durch Verwendung eines MPP-Tracker und/oder einer Winderfassung.

Außerdem oder alternativ weist die Hybridkraftwerksteuereinheit und/oder die Gaserzeugungsanlagensteuereinheit, eine Frequenzerfassung aufweist, die die Netzfrequenz des ersten Netzabschnittes erfasst und die von der Gaserzeugungsanlage aus dem ersten Netzabschnitt aufgenommene Leistung einer von den Windenergieanlagen erzeugten Leistung nachführt, um die Netzfrequenz in dem ersten Frequenzbereich zu halten.

Es wird also ferner auch vorgeschlagen, dass die aufgenommene elektrische Leistung der Gaserzeugungsanlagen der, von den Windenergieanlagen erzeugten Leistung nachgeführt wird.

In einer weiter bevorzugten Ausführungsform werden die Windenergieanlagen mit einer ersten Statik betrieben und die Gaserzeugungsanlagen mit einer zweiten Statik betrieben, wobei die erste Statik und die zweite Statik gegenläufig sind.

Es wird also insbesondere vorgeschlagen, dass sich die Leistungsabgabe der Windenergieanlagen und die Leistungsaufnahme der Gaserzeugungsanlage gegenläufig verhalten, insbesondere so, dass es zu einem Leistungsgleichgewicht innerhalb des ersten Netzabschnittes kommt.

Bevorzugt ist die Statik eine Frequenz-Wirkleistungs-Statik oder eine Spannungs-Blindleistungs-Statik.

Vorzugsweise ist die Hybridkraftwerkssteuereinheit dazu eingerichtet, das Hybridkraftwerk derart zu steuern, dass der erste Netzabschnitt und/oder der zweite Netzabschnitt eine vorbestimmte Frequenzqualität aufweist und /oder einhält.

Zum Bestimmen der Frequenzqualität kann beispielsweise ein Indikator verwendet werden, wie eine Wahrscheinlichkeitsdichtefunktion der Netzfrequenz oder dergleichen. Für diesen Indikator wird ein vorbestimmter Grenzwert vorgegeben und sofern sich der Indikator oberhalb des vorbestimmten Grenzwertes befindet, werden keine weiteren Maßnahmen ergriffen. Unterschreitet der Indikator hingegen den vorbestimmten Grenzwert, werden weitere Maßnahmen ergriffen. Eine Maßnahme kann beispielsweise die Veränderung der hierin beschriebenen Statiken sein und/oder das Aktivieren bestimmter Betriebsmodi für das Hybridkraftwerk. Der vorbestimmte Grenzwert für die Frequenzqualität ca. 10²/2000mHz.

Vorzugsweise wird das Hybridkraft wenigstens unter Berücksichtigung eines der nachfolgenden Kriterien ausgelegt oder dimensioniert: einer Windböe, insbesondere einer 50-Jahres-Böe; einer Windstille; eines Fehlers einer Windenergieanlage, der insbesondere zu einem Leistungseinbruch von 5 Prozent oder mehr führt; eines Fehlers einer Gaserzeugungsanlage, der insbesondere zu einem Leistungs-einbruch bis zu 25 Prozent führt; eines Fehlers eines elektrischen Speichers, der im ersten Netzabschnitt und/oder im zweiten Netzabschnitt angeordnet ist; und/oder eines Erd- oder Kurzschluss im elektrischen Netz, insbesondere im ersten Netzabschnitt des elektrischen Netzes.

Es wird also insbesondere auch vorgeschlagen, dass Hybridkraftwerk unter Berücksichtigung des elektrischen Verhaltens bzw. aus netztechnischer Sicht zu dimensionieren, und nicht wie üblich ausschließlich unter Berücksichtigung von wirtschaftlichen Faktoren.

Erfindungsgemäß wird ferner ein Verfahren zum Steuern eines Hybridkraftwerkes vorgeschlagen, insbesondere wie hierin beschrieben. Das Verfahren zum Steuern des Hybridkraftwerkes umfasst dabei die Schritte: Erfassen einer verfügbaren Windleistung, insbesondere durch eine Hybridkraftwerksteuereinheit und/oder eine Windparksteuereinheit; Vorgeben eines Sollwertes, in Abhängigkeit der verfügbaren Windleistung, zum Erzeugen einer elektrischen Wirkleistung mittels einer Vielzahl von Windenergieanlagen, insbesondere durch eine bzw. die Hybridkraftwerksteuereinheit und/oder einer bzw. der Windparksteuereinheit; Erfassen einer Netzfrequenz in einem elektrischen Netz oder in einem Netzabschnitt des Hybridkraftwerkes, insbesondere durch eine bzw. die Hybridkraftwerksteuereinheit und/oder eine Gaserzeugungsanlagensteuereinheit; und Vorgeben eines Sollwertes, in Abhängigkeit der erfassten Netzfrequenz, zum Aufnehmen einer weiteren elektrischen Wirkleistung mittels wenigstens einer Gaserzeugungsanlage, insbesondere durch eine bzw. die Hybridkraftwerksteuereinheit und/oder eine Gaserzeugungsanlagensteuereinheit, bevorzugt so, dass die von der wenigstens einen Gaserzeugungsanlage aufgenommene elektrische Leistung im Wesentlichen der von der Vielzahl der Windenergieanlagen erzeugten elektrischen Leistung entspricht.

Die Windenergieanlagen und die Gaserzeugungsanlagen sind dabei bevorzugt an ein und demselben Netzabschnitt angeordnet und zur Gaserzeugung dimensioniert. Dies bedeutet insbesondere auch, dass die von den Windenergieanlagen erzeugte elektrische Leistung im Wesentlichen vollständig von den Gaserzeugungsanlagen abgenommen und in Gas umgewandelt wird.

Bevorzugt erzeugen die Windenergieanlagen dabei in Abhängigkeit eines vorherrschenden Windes eine maximal mögliche Leistung, insbesondere Wirkleistung. Die Gaserzeugungsanlagen werden dieser erzeugten Leistung mittels einer Frequenz-Wirkleistungs-Regelung nachgeführt. Die Steuerung bzw. die Regelung der Gaserzeugungsanlagen erfolgt dabei insbesondere so, dass im dem, insbesondere ersten, Netzabschnitt ein Leistungsgleichgewicht vorherrscht.

Es wird also insbesondere auch vorgeschlagen, dass innerhalb des Hybridkraftwerkes primär die Windenergieanlagen regelt werden und, dass die Gaserzeugungsanlagen ihre Gaserzeugung an der von den Windenergieanlagen erzeugten Leistung anpassen, beispielsweise mittels einer Frequenz-Wirkleistungs-Regelung, die die Netzfrequenz in dem Netzabschnitt zwischen Windenergieanlagen und Gaserzeugungsanlage erfasst.

In einer Ausführungsform des Hybridkraftwerkes erzeugen also die Windenergieanlagen beispielsweise mittels eines MPP-Tracker eine maximal mögliche Leistung und die Gaserzeugungsanlagen regeln ihre abgenommene Leistung unter Berücksichtigung der von den Windenergieanlagen erzeugten Leistung, insbesondere so, dass die Netzfrequenz im Wesentlichen der Netz-Nenn-Frequenz entspricht bzw. sich innerhalb des ersten Frequenzbereiches befindet.

In einer anderen Ausführungsform des Hybridkraftwerkes wird die Regelung des Hybridkraftwerkes, also insbesondere die Regelung der Leistungserzeugung und der Leistungsabnahme, von einer Hybridkraftwerksteuereinheit vorgenommen, die beispielsweise der Windparksteuereinheit und der Gaserzeugungsanlagensteuereinheit übergeordnet sind.

Vorzugsweise umfasst das Verfahren zum Steuern eines Hybridkraftwerkes ferner die Schritte: Erfassen einer Netzfrequenz und/oder einer Netzspannung in einem Netzabschnitt; und Vorgeben von Sollwerten, insbesondere Leistungssollwerten, an einen Netzumrichter, insbesondere um eine Spannung und/oder eine Frequenz in einem ersten oder einem zweiten, mit dem Netzumrichter verbundenen Netzabschnitt zu stabilisieren.

Die Sollwerte für den Netzumrichter werden dabei bevorzugt durch eine Hybridkraftwerksteuereinheit vorgegeben. Der Netzumrichter ist dabei wie hierin beschrieben ausgeführt und/oder insbesondere dazu eingerichtet, eine Frequenz und/oder eine Spannung zu stabilisieren.

Vorzugsweise umfasst das Verfahren zum Steuern eines Hybridkraftwerkes ferner den Schritt: Anpassen von Statiken für Windenergieanlagen und/oder Gaserzeugungsanlagen, insbesondere in Abhängigkeit einer erfassten Netzfrequenz und/oder einer erfassten Netz-spannung.

In einem weiteren Ausführungsbeispiel werden die Windenergieanlagen und/oder die Gaserzeugungsanlagen beispielsweise mittels Statiken geregelt und/oder die Statiken werden der Netzfrequenz bzw. der Netzspannung entsprechend angepasst.

Vorzugsweise erfolgt die Vorgabe der Sollwerte, insbesondere der Leistungssollwerte, unter Berücksichtigung einer Frequenz- und/oder Spannungsqualität.

Es wird also insbesondere vorgeschlagen, dass die Netzfrequenz und/oder die Netzspannung erfasst und bewertet wird, beispielsweise durch einen Indikator und/oder ein statistisches Mittel, wie einer Wahrscheinlichkeitsdichtefunktion.

Anschließend werden die Sollwerte unter Berücksichtigung dieser Bewertung bzw. der Qualität vorgegeben. Ist die Qualität der Frequenz und/oder der Spannung überdurchschnittlich, können die Sollwerte beispielsweise dynamischer gewählt werden. Ist die Qualität der Frequenz und/oder der Spannung unterdurchschnittlich, können die Sollwerte beispielsweise statischer gewählt werden. Durch eine derartige Vorgabe von Sollwerten ist es insbesondere möglich, dass Hybridkraftwerk dynamischer zu betrieben, ohne, dass das Hybridkraftwerk aus elektrotechnischer bzw. netztechnischer Sicht instabil wird. Durch eine derartige Vorgehensweise kann mehr elektrische Leistung und somit auch mehr Gas produziert werden.

Vorzugsweise umfasst das Verfahren zum Steuern eines Hybridkraftwerkes ferner den Schritt: Erfassen einer Netzspannung und/oder einer Netzfrequenz in einem weiteren Netzabschnitt; und Einstellen einer einzuspeisenden Wirk- und/oder Blindleistung in Abhängigkeit der erfassten Netzspannung und/oder Netzfrequenz an einem elektrischen Speicher, der insbesondere dazu eingerichtet ist, an dem weiteren Netzabschnitt spannungsprägend zu arbeiten.

Vorzugsweise wird die von den Windenergieanlagen erzeugte Leistung zeitweise reduziert, bis die von der Gaserzeugungsanlage entnommene Leistung der erzeugten Leistung der Windenergieanlagen entspricht, insbesondere wenn eine Windböe auftritt und/oder die Netzfrequenz einen Frequenzbereich verlässt.

Alternativ oder zusätzlich wird die von der Gaserzeugungsanlage aufgenommene Leistung reduziert, bis die von den Windenergieanlagen erzeugte Leistung der entnommenen Leistung der Gaserzeugungsanlage entspricht, insbesondere bei einer Windflaute und/oder die Netzfrequenz einen Frequenzbereich verlässt.

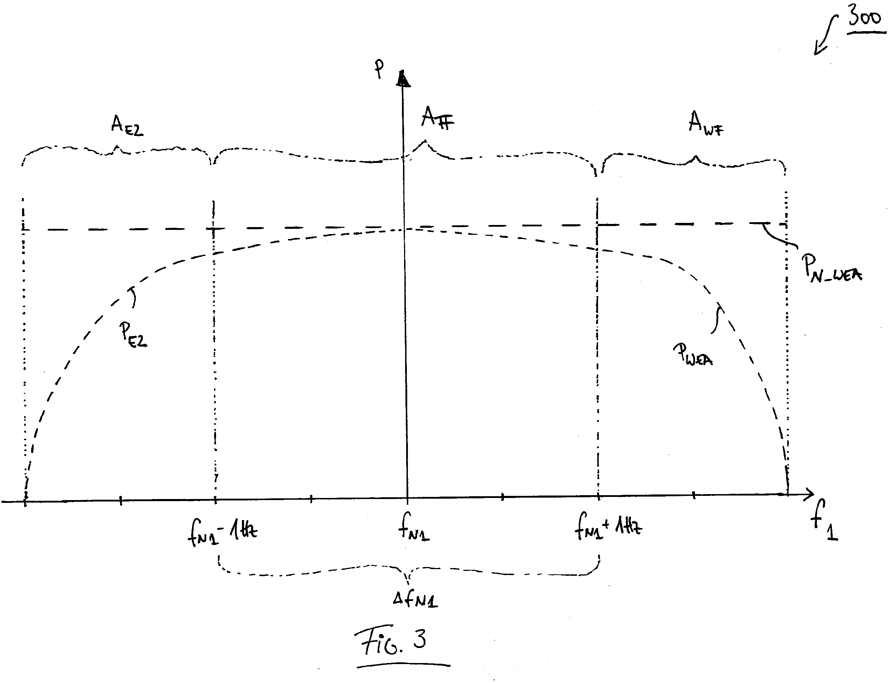

Es wird also insbesondere ein Frequenzbereich für die Netzfrequenz vorgegeben, und erst wenn die Netzfrequenz diesen Frequenzbereich verlässt, wird aktiv in die Leistungsregelung der Windenergieanlagen und/oder der Gaserzeugungsanlagen eingegriffen. Dies ist beispielsweise in Fig. 3 gezeigt.

Vorzugsweise umfasst das Verfahren zum Steuern eines Hybridkraftwerkes ferner den Schritt: Abschalten und/oder Herunterfahren des Hybridkraftwerkes, insbesondere so, dass der erste Netzabschnitt spannungsfrei ist, wenn ein Gas-Alarm in der Gaserzeugungsanlage ausgelöst wird; und/oder ein Erd- und/oder Kurzschluss im Netzabschnitt auftritt; und/oder die Leistungsfähigkeit der Gaserzeugungsanlage, insbesondere schlagartig, unter 75 Prozent fällt.

Die Leistungsfähigkeit der Gaserzeugungsanlagen kann beispielsweise unter 75 Prozent fallen, weil mehrere Elektrolyseure ausfallen. Dies wieder kann verschiedene Gründe haben, wie beispielsweise Beschädigungen an den Elektrolyseuren oder elektrische Fehler in dem weiteren, insbesondere zweiten, Netzabschnitt.

Erfindungsgemäß wird ferner eine Windenergieanlage vorgeschlagen, die einen elektrischen Generator mit einem elektrischen Stator und einem elektrischen Rotor, und einen Umrichter aufweist, der dazu eingerichtet ist, an einem Netzabschnitt eines elektrischen Netzes stabil betrieben zu werden, wobei der Netzabschnitt eine Netzfrequenz aufweist, die um bis zu +/- 10 Hz, bevorzugt +/- 7 Hz, weiter bevorzugt +/- 3 Hz, um die Netz-Nenn-Frequenz schwankt.

Die Windenergieanlage weist also insbesondere einen Umrichter, insbesondere einen Leistungsumrichter, auf, der bevorzugt als Vollumrichter ausgebildet ist und stabil an einem Netzabschnitt betrieben werden kann, der eine stark schwankende Frequenz aufweist. Der Umrichter ist also insbesondere dazu eingerichtet, an einem ersten Netzabschnitt eines elektrischen Netzes eines Hybridkraftwerkes betrieben zu werden, wie hierin beschrieben. Der Umrichter weist also einen bestimmten netzspezifischen Stellbereich auf, bevorzugt einen großen netzspezifischen Stellbereich. Dies kann beispielsweise dadurch erreicht werden, dass der Umrichter mit entsprechender Leistungselektronik und/oder einer entsprechenden Umrichtersteuereinheit mit entsprechenden Steuerprogrammen und/oder Betriebsmodi ausgestattet wird.

Alternativ oder zusätzlich ist der Umrichter der Windenergieanlage für breite Spannungsschwankungen im elektrischen Netz bzw. im Netzabschnitt ausgelegt.

Bevorzugt weist die Windenergieanlage eine Nenn-Leistung zwischen 2 MW und 10 MW auf.

Vorzugsweise ist der Umrichter dazu eingerichtet, stabil an einem Netzabschnitt mit einer Frequenzqualität von 10²/2000mHz oder besser betrieben zu werden.

Der Umrichter ist also insbesondere dazu eingerichtet, an einem Netzabschnitt betrieben zu werden, der weiten Frequenzarbeitsbereich aufweist bzw. bei dem die Netzfrequenz äußerst volatil ist bzw. stark schwankt.

Vorzugsweise weist der Umrichter wenigstens einen FRT-Modus auf, bei dem die Windenergieanlage mit einem Netzabschnitt verbunden ist und keine elektrische Leistung einspeist, auch wenn der Netzabschnitt eine Netzspannung aufweist, die weniger als 80 Prozent der Netz-Nenn-Spannung beträgt.

Vorzugsweise weist die Windenergieanlage ferner einen Windenergieanlagentransformator auf, der den Umrichter mit einem ersten Netzabschnitt verbindet, wie hierin beschrieben.

Die hierin beschriebenen Bauteile, Braugruppen und Komponenten sind insbesondere als elektrische Bauteile, Braugruppen und Komponenten zu verstehen, die sofern sie als miteinander verbunden beschrieben sind, elektrisch leitend miteinander verbunden sind. Zwischen den einzelnen Bauteilen, Baugruppen und Komponenten fließt also ein entsprechender elektrischer Strom bzw. erfolgt ein entsprechender Transport elektrischer Leistung.

Die vorliegende Erfindung ist nachfolgend anhand der begleitenden Figuren näher erläutert, wobei für gleiche oder ähnliche Bauteile oder Baugruppen dieselben Bezugszeichen verwendet werden.
- Fig. 1A: zeigt schematisch und exemplarisch eine perspektivische Ansicht einer Wind-energieanlage in einer Ausführungsform.
- Fig. 1B: zeigt schematisch und exemplarisch einen Aufbau eines elektrischen Stran-ges einer Windenergieanlage in einer Ausführungsform.
- Fig. 2: zeigt schematisch und exemplarisch einen Aufbau eines vereinzelten Hybrid-kraftwerkes in einer Ausführungsform.
- Fig. 3: zeigt schematisch und exemplarisch eine Frequenz-Leistungs-Steuerung eines Hybridkraftwerkes.

Fig. 1A zeigt schematisch und exemplarisch eine perspektivische Ansicht einer Windenergieanlage 100.

Die Windenergieanlage 100 weist einen Turm 102 und eine Gondel 104 auf.

An der Gondel 104 ist ein aerodynamischer Rotor 106 mit drei Rotorblättern 108 an einer Nabe 110 angeordnet.

Die drei Rotorblätter 108 sind dabei insbesondere symmetrisch zur Nabe 110 angeordnet, und bevorzugt um 120° versetzt zueinander.

Die Windenergieanlage 100 ist bevorzugt als Auftriebsläufer mit horizontaler Achse und drei Rotorblättern 108 auf der Luvseite, insbesondere als Horizontalläufer, ausgebildet.

Fig. 1B zeigt schematisch und exemplarisch einen elektrischen Strang 100' einer Windenergieanlage 100, insbesondere wie in Figur 1A gezeigt.

Die Windenergieanlage 100 weist einen aerodynamischen Rotor 106 auf, der mit einem Generator 120 der Windenergieanlage 100 mechanisch verbunden ist. Der aerodynamische Rotor 106 wird durch einen Wind in eine Drehbewegung versetzt und treibt damit den Generator 120 an.

Der Generator 120 weist einen elektrischen Stator 122 und einen elektrischen Rotor 124 auf. Bevorzugt ist der Generator 120 als 6-phasiger und/oder fremderregter Synchrongenerator ausgebildet, insbesondere mit zwei dreiphasigen Statorsystemen 122', 122", die um 30 Grad phasen-verschoben und voneinander elektrisch entkoppelt sind.

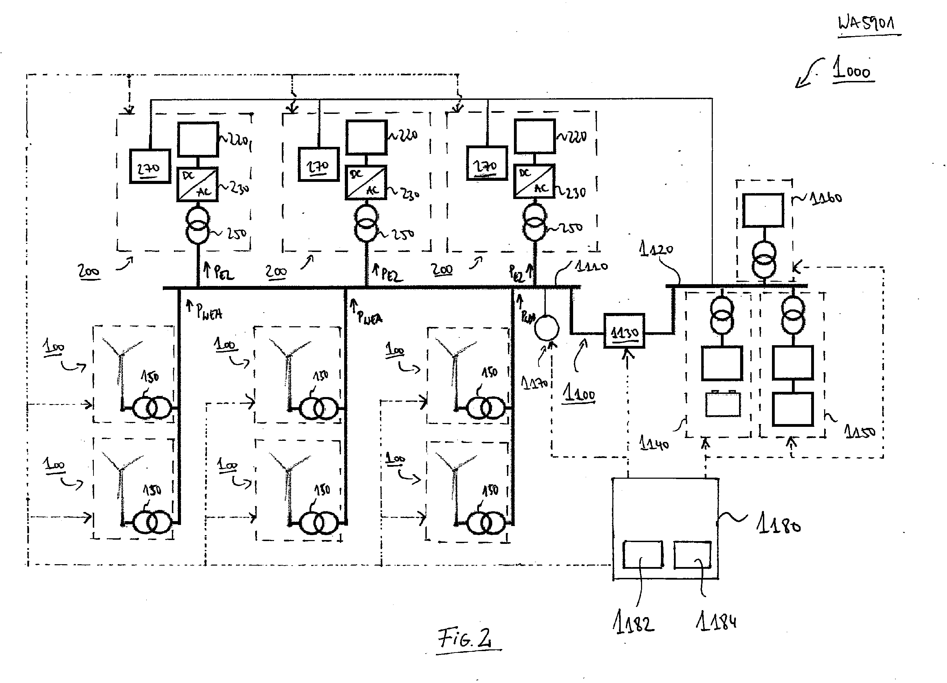

Der Generator 120 ist über einen Umrichter 130 und beispielsweise einen Windenergieanlagentransformator 150 mit einem elektrischen Netz verbunden, insbesondere einem ersten Netzabschnitt 1110 eines elektrischen Netzes 1100 eines vereinzelten Hybridkraftwerkes 1000, wie beispielsweise in Fig. 2.

Der Umrichter 130 wandelt die vom Generator 120 erzeugte elektrische Leistung in einen einzuspeisenden dreiphasigen Wechselstrom ig. Der Umrichter 130 ist hierfür bevorzugt als Umrichtersystem ausgebildet, d.h. der Umrichter weist mehrere Umrichtermodule auf, die bevorzugt parallel miteinander verschaltet sind.

Der Umrichter 130 umfasst einen Gleichrichter 132, insbesondere einen aktiven Gleichrichter, optional einen Zwischenkreis 134 und einen Wechselrichter 136. Bevorzugt ist der Umrichter 130 bzw. sind die Umrichtermodule als Direkt-Umrichter (engl. back-to-back converter) ausgeführt.

Zudem wird aus dem Umrichter 130, insbesondere aus dem Gleichspannungszwischenkreis 134, eine Erregung 138 herausgeführt, die mittels eines Erregerstromes iₑᵣ den Generator 120 fremderregt.

Der Umrichter 130 wird mittels einer Steuereinheit 140 gesteuert. Die Steuereinheit 140 kann auch als Umrichtersteuereinheit bezeichnet werden. Bevorzugt ist die Steuereinheit 140 mit einer Windenergieanlagensteuereinheit und/oder einem Netzbetreiber verbunden, um Sollvorgaben B_{wea}, beispielsweise für den einzuspeisenden Strom i_{g} oder die zu erzeugende Leistung zu empfangen.

Fig. 2 zeigt schematisch und exemplarisch einen Aufbau eines vereinzelten Hybridkraftwerkes 1000 in einer Ausführungsform.

Das vereinzelte Hybridkraftwerk 1000 umfasst ein elektrisches Netz 1100, eine Vielzahl von Windenergieanlagen 100 und mehrere Gaserzeugungsanlagen 200.

Das elektrische Netz 1100 weist einen ersten Netzabschnitt 1110 und einen zweiten Netzabschnitt 1120 auf, die über einen Netzumrichter 1130 miteinander verbunden sind.

An den ersten Netzabschnitt 1110 sind die Vielzahl von Windenergieanlagen 100 und die mehreren Gaserzeugungsanlagen 200 angeschlossen. Ferner weist der erste Netzabschnitt eine rotierende Masse 1170 auf.

Die Windenergieanlagen 100 sind wie hierin beschrieben ausgebildet und insbesondere über einen Windenergieanlagentransformator 150 mit dem ersten Netzabschnitt 1110 verbunden. Bevorzugt weist jede Windenergieanlage 100 zudem eine Windenergieanlagensteuereinheit auf.

Die Gaserzeugungsanlagen 200 sind wie hierin beschrieben ausgebildet und insbesondere über einen Gaserzeugungsanlagentransformator 250 und einem aktiven Gleichrichter 230 mit dem ersten Netzabschnitt 1110 verbunden. Über den Gaserzeugungsanlagentransformator 250 und einem Gleichrichter 230 bezieht der Gaserzeuger 220, insbesondere ein Elektrolyseur, die benötigte elektrische Leistung aus dem ersten Netzabschnitt 1110. Die frequenz- und spannungssensitiven Hilfsmittel 270 der Gaserzeugungsanlagen 200 sind ferner mit dem zweiten Netzabschnitt 1120 verbunden.

Die rotierende Masse 1170 dient dem ersten Netzabschnitt insbesondere als Netzgeber. Die rotierende Masse 1170 prägt also insbesondere eine Spannung in den ersten Netzabschnitt ein, mit der sich die Windenergieanlagen 100 synchronisieren können. Die rotierende Masse 1170 ist beispielsweise aus einer Gasturbine mit Synchrongenerator oder aus einem elektrischen Speicher mit virtueller Synchronmaschine ausgebildet.

An den zweiten Netzabschnitt 1120 sind ein elektrischer Speicher 1140, insbesondere ein Batterie-Energiespeichersystem (engl. Battery Energy Storage System, kurz BESS) mit einem spannungsprägenden Umrichter, eine Brennstoffzelle 1150 mit spannungsprägenden Umrichter, eine elektrische Last 1160 und die frequenz- und spannungssensitiven Hilfsmittel 270 der Gaserzeugungsanlagen angeschlossen.

Die elektrische Last 1160 ist beispielsweise ein elektrisches Netz eines Hafens und/oder einer Gas-Pipeline, die mittels des zweiten Netzabschnittes mit Strom versorgt werden, insbesondere so, dass das Gas abtransportiert werden kann.

Der erste Netzabschnitt 1110 und der zweite Netzabschnitt 1120 sind ferner über einen gemeinsamen Netzumrichter 1130 verbunden. Der Netzumrichter ist dabei insbesondere wie hierin beschrieben ausgeführt.

Das Hybridkraftwerk 1000 wird mittels einer Hybridkraftwerkssteuereinheit 1180 gesteuert. Die Hybridkraftwerkssteuereinheit 1180 umfasst beispielsweise eine Windparksteuereinheit 1182 und/oder eine Gaserzeugungsanlagensteuereinheit 1184 und ist dazu eingerichtet, bevorzugt sämtliche elektrischen Mittel des Hybridkraftwerkes zu steuern, insbesondere mittels Sollwerten zu steuern.

Fig. 3 zeigt schematisch und exemplarisch eine Frequenz-Leistungs-Steuerung 300 eines Hybridkraftwerkes 1000, insbesondere anhand eines Koordinatensystems, wobei auf der x-Achse des Koordinatensystems die Netzfrequenz f1 und auf der y-Achse des Koordinatensystems die elektrische Leistung P abgetragen sind.

Für ein besseres Verständnis ist in das Koordinatensystem ebenfalls die Nenn-Leistung PN_wea der Windenergieanlagen eingezeichnet.

Solange sich die Netzfrequenz f1 innerhalb des ersten Frequenzbereiches ΔfN1, der beispielsweise +/- 1 Hz beträgt, befindet, werden im Wesentlichen keine Regelungseingriffe innerhalb des ersten Netzabschnittes vorgenommen, und das Hybridkraftwerk arbeitet in einem ersten Arbeitsbereich A_{FF}, in dem die sich Netzfrequenz f1 sich im Wesentlichen freibeweg (engl. free floating system frequency).

Kommt es jetzt beispielsweise auf Grund einer starken Böe zu einer Erhöhung der Erzeugung der elektrischen Leistung P durch die Windenergieanlagen und damit verbunden zu einer Erhöhung der Netzfrequenz f1, kann, wenn sich die Netzfrequenz f1 außerhalb des Frequenzbereiches ΔfN1 bewegt, eine Regelung der Windenergieanlagen vorgenommen werden. Beispielsweise wird dann die von den Windenergieanlagen erzeugte elektrische Leistung aktiv gedrosselt, insbesondere solange, bis die von der Gaserzeugungsanlage entnommene Leistung der erzeugten Leistung der Windenergieanlagen entspricht. Dies ist durch den zweiten Arbeitsbereich A_{WF} gekennzeichnet.

Kommt es beispielsweise auf Grund einer Windstille zu einer Verringerung der Erzeugung der elektrischen Leistung P durch die Windenergieanlagen und damit verbunden zu einer Verringerung der Netzfrequenz f1, kann, wenn sich die Netzfrequenz f1 außerhalb des Frequenzbereiches ΔfN1 bewegt, eine Regelung der Gaserzeugungsanlagen vorgenommen werden. Beispielsweise wird die von den Gaserzeugungsanlagen abgenommene elektrische Leistung aktiv gedrosselt, insbesondere solange, bis die von den Windenergieanlagen erzeugte Leistung der entnommenen Leistung der Gaserzeugungsanlage entspricht, insbesondere bei einer Windflaute.

### Bezuqszeichenliste

- 100: Windenergieanlage
- 100': elektrischer Strang, insbesondere der Windenergieanlage
- 102: Turm, insbesondere der Windenergieanlage
- 104: Gondel, insbesondere der Windenergieanlage
- 106: aerodynamischer Rotor, insbesondere der Windenergieanlage
- 108: Rotorblatt, insbesondere der Windenergieanlage
- 110: Nabe, insbesondere der Windenergieanlage
- 120: Generator, insbesondere der Windenergieanlage
- 122: Stator, insbesondere elektrischer Stator des Generators
- 122': erstes elektrisches System, insbesondere des Stators
- 122": zweites elektrisches System, insbesondere des Stators
- 124: Rotor, insbesondere elektrischer Rotor des Generators
- 130: Umrichter, insbesondere Leistungsumrichter der Windenergieanlage
- 150: Transformator, insbesondere der Windenergieanlagentransformator

- 200: Gaserzeugungsanlage
- 220: Gaserzeuger, insbesondere Elektrolyseur
- 230: Umrichter, insbesondere Gleichrichter der Gaserzeugungsanlage
- 250: Transformator, insbesondere der Gaserzeugungsanlage

- 300: Frequenz-Leistungs-Steuerung, insbesondere eines Hybridkraftwerkes

- 1000: vereinzeltes Hybridkraftwerk
- 1100: elektrisches Netz
- 1110: erster Netzabschnitt, insbesondere des elektrischen Versorgungsnetzes
- 1120: zweiter Netzabschnitt, insbesondere des elektrischen Versorgungsnetzes
- 1130: Netzumrichter, insbesondere des elektrische Verteilnetzes
- 1140: elektrischer Energiespeicher
- 1150: Brennstoffzelle, insbesondere mit spannungsprägendem Umrichter
- 1160: elektrische Last
- 1170: rotierende Masse
- 1180: Steuereinheit, insbesondere des Hybridkraftwerkes
- 1182: Steuereinheit, insbesondere der Windenergieanlagen
- 1184: Steuereinheit, insbesondere der Gaserzeugungsanlagen
- fN1: erste Netznennfrequenz, insbesondere des ersten Netzabschnittes
- fN2: zweite Netznennfrequenz, insbesondere des zweiten Netzabschnittes
- f1: erste Netzfrequenz, insbesondere des ersten Netzabschnittes
- f2: zweite Netzfrequenz, insbesondere des zweiten Netzabschnittes
- S1: erste Netzstatik, insbesondere des ersten Netzabschnittes
- S2: zweite Netzstatik, insbesondere des zweiten Netzabschnittes

- UN1: erste Netznennspannung, insbesondere des ersten Netzabschnittes
- UN2: zweite Netznennspannung, insbesondere des zweiten Netzabschnittes
- U1: erste Netzspannung, insbesondere des ersten Netzabschnittes
- U2: zweite Netzspannung, insbesondere des zweiten Netzabschnittes
- ΔfN1: erster Frequenzbereich, insbesondere des ersten Netzabschnittes

- PN_wea: Nenn-Leistung, insbesondere der Windenergieanlagen
- P_wea: erzeugte elektrische Leistung der Windenergieanlage
- P_E2: abgenommene elektrische Leistung der Gaserzeugungsanlage

- A_{FF}: erster Arbeitsbereich, insbesondere free-floating
- A_{WF}: zweiter Arbeitsbereich, insbesondere Reduzierung der erzeugten Leistung

## Patentansprüche

1. Elektrisches Netz (1100), insbesondere für ein vereinzeltes Hybridkraftwerk (1000), umfassend:
- einen ersten Netzabschnitt (1110), der dazu eingerichtet ist:
- mit wenigstens einer Windenergieanlage verbunden zu werden,
- mit wenigstens einer Gaserzeugungsanlage verbunden zu werden, und
- eine, von der Windenergieanlage erzeugte elektrische Leistung zu der wenigstens einen Gaserzeugungsanlage zu transportieren;
- einen zweiten Netzabschnitt (1120), der dazu eingerichtet ist:
- mit der wenigstens einen Gaserzeugungsanlage verbunden zu werden; und
- einen Netzumformer oder Netzumrichter (1130), der den ersten Netzabschnitt (1110) und den zweiten Netzabschnitt (1120) elektrisch miteinander verbindet und dazu eingerichtet ist:
- elektrische Leistung zwischen dem ersten elektrischen Netzabschnitt (1110) und dem zweiten elektrischen Netzabschnitt (1120) bidirektional auszutauschen,
wobei
- der erste Netzabschnitt (1110), eine erste Netznennfrequenz (fN1) und eine erste Netznennspannung (UN1) aufweist und mit einer ersten Netzfrequenz (f1) und einer ersten Netzspannung (U1) betrieben werden kann; und
- der zweite Netzabschnitt (1120), eine zweite Netznennfrequenz (fN2) und eine zweite Netznennspannung (UN2) aufweist und mit einer zweiten Netzfrequenz (f2) und einer zweiten Netzspannung (U2) betrieben werden kann; und
wobei
- der erste Netzabschnitt (1110) für einen ersten Frequenzbereich (Δf1) um die Netznennfrequenz (fN1) ausgelegt ist, in dem sich die erste Netzfrequenz (f1) bewegt; und
- der zweite Netzabschnitt (1120) für einen zweiten Frequenzbereich (Δf2) um die Netznennfrequenz (fN2) ausgelegt ist, in dem sich die zweite Netzfrequenz (f2) bewegt; wobei
- der erste Frequenzbereich (Δf1) größer als der zweite Frequenzbereich (Δf2) ist.

2. Elektrisches Netz (1100) nach Anspruch 1, wobei
- der erste Netzabschnitt (1110) eine erste Nenn-Leistung (P_Nenn_1) aufweist und
- der zweite Netzabschnitt (1120) eine zweite Nenn-Leistung (P_Nenn_2) aufweist, wobei
- die erste Nenn-Leistung (P_Nenn_1) größer als die zweite Nenn-Leistung (P_Nenn_2) ist, insbesondere wenigstens 5-mal so groß, bevorzugt wenigstens 10-mal so groß.

3. Elektrisches Netz (1100) nach Anspruch 1 oder 2, wobei
- der erste Frequenzbereich (Δf1) gleich und/oder kleiner 20 Prozent, bevorzugt gleich und/oder kleiner 10 Prozent, der ersten Netz-Nenn-Frequenz (fN1) beträgt; und/oder
- der zweite Frequenzbereich (Δf2) gleich und/oder kleiner2 Prozent, bevorzugt gleich und/oder kleiner 1 Prozent, der zweiten Netz-Nenn-Frequenz (fN2) beträgt.

4. Elektrisches Netz (1100) nach wenigstens einem der vorstehenden Ansprüche, wobei
- der zweite Netzabschnitt (1120) dazu eingerichtet ist, spannungs- und/oder frequenzsensible Hilfsmittel, insbesondere der Gaserzeugungsanlagen, spannungs- und/oder frequenzstabil mit elektrischer Leistung zu versorgen.

5. Elektrisches Netz (1100) nach wenigstens einem der vorstehenden Ansprüche, wobei
- der Netzumrichter (1130) dazu eingerichtet ist:
- elektrische Leistung zwischen dem ersten Netzabschnitt (1110) und dem zweiten Netzabschnitt (1120), bevorzugt bidirektional, auszutauschen;
- einen Netzbildner und/oder geregelte Stromquelle für den ersten Netzabschnitt und/oder den zweiten Netzabschnitt auszubilden;
- die Netzspannung und/oder die Netzfrequenz im ersten Netzabschnitt und/oder im zweiten Netzabschnitt zu stabilisieren.
- eine stabile zweite Netzfrequenz (f2) und/oder eine stabile zweite Netzspannung (U2) im zweiten Netzabschnitt bereitzustellen, insbesondere für spannungs- und/oder frequenzsensible Hilfsmittel;
- eine Netzspannung (U2) in den ersten Netzabschnitt und/oder den zweiten Netzabschnitt (1120) einzuprägen.
- eine Kurzschlussleistung für den ersten Netzabschnitt und/oder den zweiten Netzabschnitt bereitzustellen, insbesondere wenn eine Störung im ersten Netzabschnitt und/oder im zweiten Netzabschnitt auftritt.
- unverzögert eine Wirk- und Blindleistung für den ersten Netzabschnitt und/oder den zweiten Netzabschnitt bereitzustellen

6. Elektrisches Netz (1100) nach wenigstens einem der vorstehenden Ansprüche, wobei
- das elektrische Netz (1100) elektrisch autark oder isoliert ausgeführt ist; und/oder
- das elektrische Netz (1100) ausschließlich mit anderen elektrischen Netzen verbunden ist, die eine kleinere Netz-Nennleistung und/oder Netz-Nennspannung aufweisen; und/oder
- das elektrische Netz (1100) nicht mit einem elektrischen Versorgungs- oder Verbundnetz oder einem anderen elektrischen Verteilnetz verbunden ist, welches insbesondere eine gleiche oder größere Netz-Nennleistung und/oder Netz-Nennspannung aufweist, als der erste Netzabschnitt (1110) und/oder der zweite Netzabschnitt (1120);
- der erste Netzabschnitt (1110) nicht mit einem anderen elektrischen Verteilnetz und/oder einem elektrischen Versorgungs- oder Verbundnetz verbunden ist.

7. Hybridkraftwerk (1000), insbesondere vereinzeltes Hybridkraftwerk, umfassend:
- ein elektrisches Verteilnetz (1110) nach wenigstens einem der Ansprüche 1 bis 6,
- eine Vielzahl von Windenergieanlagen (100), die an den ersten Netzabschnitt (1110) angeschlossen sind, und
- wenigstens eine Gaserzeugungsanlage (200), die an den ersten Netzabschnitt (1110) und an den zweiten Netzabschnitt (1120) angeschlossen ist.

8. Hybridkraftwerk (1000) nach Anspruch 7, wobei
- die Windenergieanlagen (100) jeweils über einen Wechselrichter (130) und/oder einen Transformator (150) mit dem ersten Netzabschnitt (1110) verbunden sind und/oder
- die Gaserzeugungsanlage (200) über einen Gleichrichter (230) und/oder einen Transformator (250) mit dem ersten Netzabschnitt verbunden ist.

9. Hybridkraftwerk (1000) nach Anspruch 7 oder 8, wobei
- die Gaserzeugungsanlage (200) spannungs- und/oder frequenzsensible Hilfsmittel aufweist, die mit dem zweiten Netzabschnitt verbunden sind.

10. Hybridkraftwerk (1000) nach wenigstens einem der Ansprüche 7 bis 9, wobei
- das Hybridkraftwerk als Power-to-Gas-Kraftwerk oder als Power-to-Liquid-Kraftwerk oder Power-to-Fuel-Kraftwerk ausgebildet und/oder
- das Hybridkraftwerk elektrisch autark ist und/oder als vereinzeltes bzw. isoliertes Hybridkraftwerk ausgeführt ist.

11. Hybridkraftwerk (1000) nach wenigstens einem der Ansprüche 7 bis 10, wenigstens umfassend einen Netzgeber und/oder Netzbildner und/oder eine rotierende Masse und/oder weitere elektrische Mittel.

12. Hybridkraftwerk (1000) nach wenigstens einem der Ansprüche 7 bis 11, ferner umfassend:
- eine Hybridkraftwerkssteuereinheit (1180), die dazu eingerichtet ist, dass Hybridkraftwerk zu steuern; und/oder
- eine Windparksteuereinheit, die dazu eingerichtet ist, die Vielzahl von Windenergieanlagen zu steuern; und/oder
- eine Gaserzeugungsanlagensteuereinheit, die dazu eingerichtet ist, die oder eine Vielzahl von Gaserzeugungsanlagen zu steuern.

13. Hybridkraftwerk (1000) nach Anspruch 12, wobei
- die Hybridkraftwerkssteuereinheit und/oder die Windparksteuereinheit und/oder die Gaserzeugungsanlagensteuereinheit dazu eingerichtet ist,
- die erste Netzfrequenz (f1) mittels der Vielzahl der Windenergieanlagen (100) und/oder der wenigstens einen Gaserzeugungsanlage (200) zu regeln, insbesondere so, dass sich die erste Netzfrequenz (f1) innerhalb des erste Frequenzbereiches (Δf1) bewegt; und/oder
- die erste Netzspannung (U1) und/oder die zweite Netzspannung (U2) zu regeln; und/oder
- die zweite Netzfrequenz (f2) stabil zu halten.

14. Hybridkraftwerk (1000) nach Anspruch 12 oder 13, wobei
- die Hybridkraftwerksteuereinheit (1180) und/oder die Windparksteuereinheit (1182) eine Leistungsoptimierung, insbesondere einen MPP-Tracker und/oder eine Winderfassung, für die Vielzahl der Windenergieanlagen aufweist, um eine maximale elektrische Leistung mit den Windenergieanlagen zu erzeugen und/oder
- die Hybridkraftwerksteuereinheit (1180) und/oder die Gaserzeugungsanlagensteuereinheit (1184), eine Frequenzerfassung aufweist, die die Netzfrequenz (f1) des ersten Netzabschnittes erfasst und die von der Gaserzeugungsanlage aus dem ersten Netzabschnitt aufgenommene Leistung einer von den Windenergieanlagen (100) erzeugte Leistung nachführt, um die Netzfrequenz (f1) in dem ersten Frequenzbereich (Δf1) zu halten.

15. Hybridkraftwerk (1000) nach einem der Ansprüche 7 bis 14, wobei
- die Hybridkraftwerksteuereinheit (1180) und/oder die Windparksteuereinheit (1182) eine erste Statik (Swea) aufweist und
- die Hybridkraftwerksteuereinheit (1180) und/oder die Gaserzeugungsanlagensteuereinheit (1184) eine zweite Statik (Sgas) aufweist, wobei
- die erste Statik und die zweite Statik gegenläufig sind.

16. Hybridkraftwerk (1000) nach wenigstens einem der Ansprüche 7 bis 15, wobei
- die Hybridkraftwerkssteuereinheit (1180) dazu eingerichtet ist, das Hybridkraftwerk derart zu steuern, dass der erste Netzabschnitt und/oder der zweite Netzabschnitt eine vorbestimmte Frequenzqualität aufweist und/oder einhält.

17. Hybridkraftwerk (1000) nach wenigstens einem der Ansprüche 7 bis 16, wobei das Hybridkraft wenigstens unter Berücksichtigung eines der nachfolgenden Kriterien dimensioniert wurde, bestehend aus:
- einer Windböe, insbesondere einer 50-Jahres-Böe;
- einer Windstille;
- eines Fehlers einer Windenergieanlage, der insbesondere zu einem Leistungseinbruch von 5 Prozent oder mehr führt;
- eines Fehlers einer Gaserzeugungsanlage, der insbesondere zu einem Leistungseinbruch bis zu 25 Prozent führt;
- eines Fehlers eines elektrischen Speichers, der im ersten Netzabschnitt und/oder im zweiten Netzabschnitt angeordnet ist;
- eines Erd- oder Kurzschluss im elektrischen Netz, insbesondere im ersten Netzabschnitt des elektrischen Netzes.

18. Verfahren zum Steuern eines Hybridkraftwerkes, insbesondere nach einem der Ansprüche 7 bis 17, umfassend die Schritte:
- Erfassen einer verfügbaren Windleistung, insbesondere durch eine Hybridkraftwerksteuereinheit (1180) und/oder eine Windparksteuereinheit (1182);
- Vorgeben eines Sollwertes, in Abhängigkeit der verfügbaren Windleistung, zum Erzeugen einer elektrischen Wirkleistung mittels einer Vielzahl von Windenergieanlagen, insbesondere durch eine bzw. die Hybridkraftwerksteuereinheit (1180) und/oder einer bzw. der Windparksteuereinheit (1182);
- Erfassen einer Netzfrequenz in einem elektrischen Netz oder in einem Netzabschnitt des Hybridkraftwerkes, insbesondere durch eine bzw. die Hybridkraftwerksteuereinheit (1180) und/oder eine Gaserzeugungsanlagensteuereinheit (1184); und
- Vorgeben eines Sollwertes, in Abhängigkeit der erfassten Netzfrequenz, zum Aufnehmen einerweiteren elektrischen Wirkleistung mittels wenigstens einer Gaserzeugungsanlage, insbesondere durch eine bzw. die Hybrid kraftwerksteuereinheit (1180) und/oder eine Gaserzeugungsanlagensteuereinheit (1184), bevorzugt so, dass die von der wenigstens einen Gaserzeugungsanlage aufgenommene elektrische Leistung im Wesentlichen der von der Vielzahl der Windenergieanlagen erzeugten elektrischen Leistung entspricht .

19. Verfahren zum Steuern eines Hybridkraftwerkes nach Anspruch 18, ferner umfassend die Schritte:
- Erfassen einer Netzfrequenz und/oder einer Netzspannung in einem Netzabschnitt; und
- Vorgeben von Sollwerten, insbesondere Leistungssollwerten, an einen Netzumrichter, insbesondere um eine Spannung und/oder eine Frequenz in einem ersten oder einem zweiten, mit dem Netzumrichter verbundenen Netzabschnitt zu stabilisieren.

20. Verfahren zum Steuern eines Hybridkraftwerkes nach Anspruch 18 oder 19, ferner umfassend die Schritte:
- Anpassen von Statiken für Windenergieanlagen und/oder Gaserzeugungsanlagen, insbesondere in Abhängigkeit einer erfassten Netzfrequenz und/oder einer erfassten Netzspannung.

21. Verfahren zum Steuern eines Hybridkraftwerkes nach wenigstens einem der Ansprüche 18 bis 20,
- wobei das Vorgeben der Sollwerte unter Berücksichtigung einer Frequenz- und/oder Spannungsqualität erfolgt.

22. Verfahren zum Steuern eines Hybridkraftwerkes nach wenigstens einem der Ansprüche 18 bis 21, wobei
- die Windenergieanlagen die erzeugte elektrische Leistung zeitweise reduzieren, bis die von der Gaserzeugungsanlage entnommene Leistung der erzeugten Leistung der Windenergieanlagen entspricht, insbesondere wenn eine Windböe auftritt und/oder die Netzfrequenz einen Frequenzbereich verlässt; und/oder
- die Gaserzeugungsanlage die abgenommene elektrische Leistung reduziert, bis die von den Windenergieanlagen erzeugte Leistung der abgenommenen elektrischen Leistung der Gaserzeugungsanlage entspricht, insbesondere bei einer Windflaute und/oder die Netzfrequenz einen Frequenzbereich verlässt.

23. Windenergieanlage (100), insbesondere für ein Hybridkraftwerk nach einem der Ansprüche 7 bis 17, umfassend:
- einen elektrischen Generator (120) mit einem elektrischen Stator (122,134) und einem elektrischen Rotor (126), und
- einen Umrichter (130), der dazu eingerichtet ist, an einem Netzabschnitt (1110) eines elektrischen Netzes (1100) stabil betrieben zu werden, wobei der Netzabschnitt eine Netzfrequenz (f1) aufweist, die um bis zu +/- 10 Hz, bevorzugt +/- 7 Hz, weiter bevorzugt +/- 3 Hz, um die Netz-Nenn-Frequenz (fN1) schwankt.

24. Windenergieanlage (100) nach Anspruch 23, wobei
- der Umrichter dazu eingerichtet ist, stabil an einem Netzabschnitt mit einer Frequenzqualität von 10²/2000mHz oder besser betrieben zu werden.

25. Windenergieanlage (100) nach Anspruch 23 oder 24, wobei
- der Umrichter wenigstens einen FRT-Modus aufweist, bei dem die Windenergieanlage mit einem Netzabschnitt verbunden ist und keine elektrische Leistung einspeist, auch wenn der Netzabschnitt eine Netzspannung aufweist, die weniger als 80 Prozent der Netz-Nenn-Spannung beträgt.
